# EUROPEAN PATENT APPLICATION

(11) **EP 4 666 907 A1**
(43) Date of publication of application: **24.12.2025**
(21) Application number: 24756387.7
(22) Date of filing: 19.02.2024
(51) Int. Cl.: A47B 19/10, A47G 9/10, H04M 1/11

(54) **CUSHION OR PILLOW WITH A FASTENING ELEMENT**

(30) Priority: 17.02.2023 ES 202330254 U
(71) Applicant: Pardo Pardo, Fátima, 30739 San Javier Murcia (ES)
(72) Inventor: Pardo Pardo, Fátima, 30739 San Javier Murcia (ES)
(74) Representative: Izquierdo Blanco, Maria Alicia
(86) International application number: PCT/ES2024/070094
(87) International publication number: WO 2024/170815

(57) **Abstract**

The invention relates to a cushion that has two flexible arms with a fastening element at the ends that allow a user to read a book or view an electronic device while lying on their back and without having to hold it with their hands.

## Description

As established in the title of the present specification, the invention refers to a cushion or pillow with a fastening element, constituting an innovation that within current techniques provides advantages thus far unknown.

Thanks to its design and configuration, the cushion or pillow allows the user to rest his or her head thereon, and can also continue reading or viewing the mobile phone or digital tablet without needing to keep their arms in an uncomfortable position.

### TECHNICAL DOMAIN

Therefore, this invention is circumscribed in the field of manufacturing cushions or pillows, and within the manufacture of accessories or supports for holding books, magazines or electronic devices such as mobile telephones or digital tablets.

### STATE OF THE ART

There are currently a great variety of supports for mobile phones, from suction cups for attaching to flat surfaces, magnets, or clamps enabling it to be held in the car, on the table or even harnesses that permit a mobile phones to be carried while walking, the hands and arms being free.

However, when we are tired and we want to read when lying down, we have no choice other than to hold the mobile book or phone with raised arms, which after a long period of time is uncomfortable and leads us to stop reading or displaying the screen of the mobile phone prematurely.

When we read, we are lying face down, and eventually it gets uncomfortable since the entire weight of the head and upper body falls on the arms.

And if we do it face up, then we have to hold the book, mobile phone or digital tablet with arms raised, which makes them get tired after a while.

In order to solve the detailed problems, the present invention is submitted.

The existence of any product with the same technical characteristics as the invention herein is unknown.

### DESCRIPTION OF THE INVENTION

The subject matter of the present Invention is the creation of a cushion or pillow with a fastening element, which provides a notable innovation within its field of application in the current state of the art, the characterizing details making it possible, conveniently included in the final claims accompanying the present description.

The invention enables the user, from a comforable lying position, to read a book, a magazine or view the screen of an electronic device without having to hold it with their hands.

To that end, the cushion or pillow comprises at least one arm that has at its end a gripping element. In this gripping element is where we have to hold the book, magazine, mobile telephone or tablet we are using.

The other end of the arm is fastened to the cushion or pillow by way of a joining means, the arm being flexible.

Accordingly, the user can rest his or her head on the cushion or the pillow, have the arms supported on the sofa, bed or similar and continue reading or viewing the screen of the electronic device.

### EXPLANATION OF THE DRAWINGS

In order to complete the description being made and in order to aid a better understanding of the characteristics of the Invention, the present specification, as an integral part thereof, includes a figure wherein, by way of illustration and not limitation, the following has been represented.

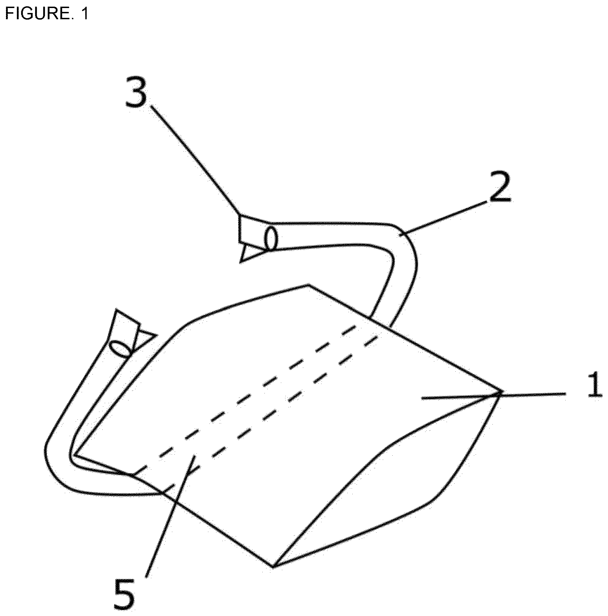

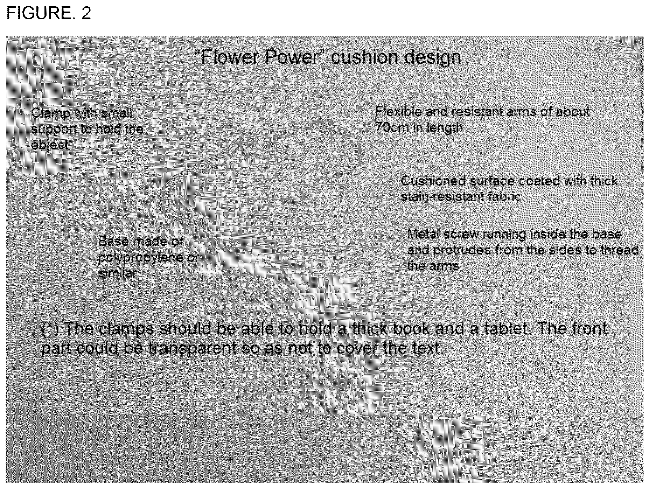

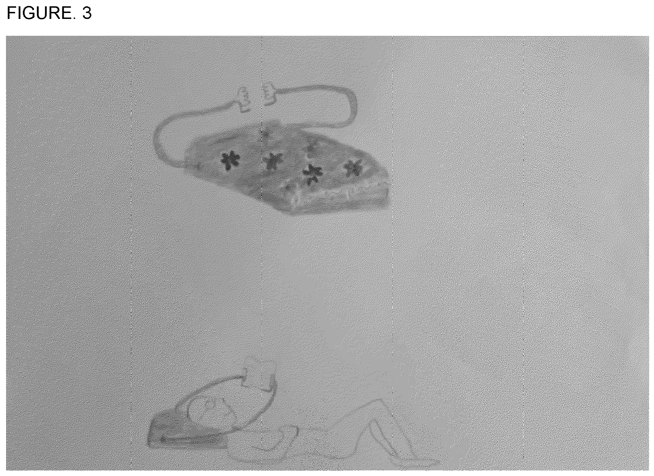

Figure 1 corresponds to a view.

### PREFERRED EMBODIMENT OF THE INVENTION

The subject matter of the present invention is a cushion or pillow with fastening element, which provides a notable innovation within its field of application, the characterizing details making it possible, conveniently included in the claims.

The cushion or pillow with fastening element comprises at least one arm (1) which has at its end a gripping element, and whose other end is fastened to the cushion or pillow (3) by a joining means, the arm being flexible.

In a preferred embodiment, the gripping element is a clamp (2), since a clamp allows it to be adjusted to different thicknesses of books, mobile phones or the like.

Different accessories can be incorporated into the arm (1) such as a map for viewing the book, a magnifier.

Furthermore, the arm can be arranged at the end where the gripping element of a support element is. The support will allow the lower part of the book, or electronic device to rest thereupon, making the grip more robust.

Preferably, the means for attaching the arm (1) to the cushion or pillow is a shaft (5) that is inserted inside a rigid base that is attached to the inside of the cushion or pillow (3) by a fastening means that can be brackets, hook-and-loop attachment or zipper, among others.

In general, it will have arms (1) to provide greater stability to the assembly.

The clamp (2) can have a cushioned covering, so that when it does not get damaged when pressed against the book or electronic device.

The arm (1) will be a swan-neck arm, since it is flexible and resistant, remaining in the posture that the user has placed.

In another embodiment the arm (1) is telescopic.

Having fully described the nature of the present invention, as well as the manner of putting it into practice, it is not considered necessary to extend the explanation for one skilled in the art to understand its scope and the advantages deriving therefrom. It is noted that within its essence, it can be put into practice in other embodiments that differ in detail from that indicated by way of example, and to which it will likewise attain the protection sought provided that its underlying principle is not altered, changed or modified.

## Claims

1. A cushion or pillow with fastening element, **characterized by** comprising at least one arm (1) that has at its end a gripping element, and the other end of which is fixed to the cushion or pillow (3) by a joining means, the arm being flexible.

2. The cushion or pillow with fastening element, according to claim 1, **characterized in that** the gripping element is a clamp (2).

3. The cushion or pillow with fastening element, according to claim 1, **characterized in that** at the end where the gripping element is, the arm (1) has a support element.

4. The cushion or pillow with fastening element, according to claim 1, **characterized in that** the means for attaching the arm (1) to the cushion or pillow is a shaft (5) that is inserted inside a rigid base that is attached to the inside of the cushion or pillow (3) by a fastening means that can be brackets, hook-and-loop attachment or zipper, among others.

5. The cushion or pillow with fastening element, according to claim 1, **characterized by** having two arms (1).

6. The cushion or pillow with fastening element, according to claim 2, **characterized in that** the clamp (2) has a cushioned covering.

7. The cushion or pillow with fastening element, according to claim 1, **characterized in that** the arm (1) is a swan-neck arm.

8. The cushion or pillow with fastening element, according to claim 1, **characterized in that** the arm (1) is telescopic.
